# EUROPEAN PATENT SPECIFICATION

(11) **EP 2 565 252 B1**
(45) Date of publication and mention of the grant of the patent: **02.07.2014**
(21) Application number: 10850498.6
(22) Date of filing: 30.04.2010
(51) Int. Cl.: C09K 11/80, C09K 11/02

(54) **ALUMINATE FLUORESCENT MATERIALS AND PREPARATION METHODS THEREOF**
FLUORESZIERENDE ALUMINATMATERIALIEN UDN HERSTELLUNGSVERFAHREN DAFÜR
MATÉRIAUX FLUORESCENTS À BASE D'ALUMINATE ET LEURS PROCÉDÉS DE PRÉPARATION

(43) Date of publication of application: 06.03.2013
(73) Proprietor: Ocean's King Lighting Science&Technology Co., Ltd., Guangdong 518054 (CN)
(72) Inventor: ZHOU, Mingjie, Shenzhen Guangdong 518054 (CN); LIU, Jun, Shenzhen Guangdong 518054 (CN); MA, Wenbo, Shenzhen Guangdong 518054 (CN)
(74) Representative: Johnson, Richard Alan
(86) International application number: PCT/CN2010/072358
(87) International publication number: WO 2011/134165

(56) References cited:
- CN-A- 101 074 374
- US-A- 5 624 602
- LIZ-MARZAN L M ET AL: "Synthesis of Nanosized Gold-Silica-Core-Shell Particles", LANGMUIR, AMERICAN CHEMICAL SOCIETY, NEW YORK, NY; US, vol. 12, 1 January 1996 (1996-01-01), pages 4329-4335, XP002314218, ISSN: 0743-7463, DOI: 10.1021/LA9601871
- JUNG DAE SOO ET AL.: 'Characteristics of Ce0.6Tb0.4MgAl11O19 Phosphor Powders Prepared by High Temperature Flame Spray Pyrolysis' JOURNAL OF ALLOYS AND COMPOUNDS vol. 472, no. 1-2, 09 June 2008, ISSN 0925-8388 pages 367 - 372

## Description

### FIELD OF THE INVENTION

The invention relates to fluorescent material technology field. More particularly, the invention relates to aluminate fluorescent materials and preparation method thereof.

### BACKGROUND OF THE INVENTION

Researches show that luminous performances of fluorescent powder have a relationship with the morphology and particle size thereof. The fluorescent powder having spherical or spherical-like structure and a uniformity of 3 to 5µm is of high luminous intensity and easy to use. However, luminous performances of fluorescent powders also have a close relationship with the preparation method thereof. Herein, the preparation process of high-temperature solid-state method is simple and suitable for industrial production, but, due to the limitations of the method, the luminous center in the matrix disperses nonuniformly, affecting their luminous efficiency. Also, a ball milling process is required because the particle size of prepared fluorescent powder is quite large. Impurities can be easily introduced and lattice defects can be caused during the ball milling process. Physical and chemical changes caused by the ball milling often lead to reduce luminance of fluorescent powder, which is unfavorable for their application. Therefore, how to improve the luminance of the fluorescent powder by improving the preparation methods thereof has been an important part of the fluorescent materials research in the field of materials chemistry and materials physics.

Though coated particles are known (Langmuir (1996), 12, pages 4329-4335 from LM Liz-Marzan et al) and also CeTbMgAlO phosphors (US 5 624 602), there is no prior art comprising a coating comprising such a phosphor on a metal nanoparticle.

### SUMMARY OF THE INVENTION

In view of this, an aluminate fluorescent material having the advantages of uniform particle size, structure stability, excellent luminous intensity and luminous efficiency is provided.

And, preparation methods of aluminate fluorescent materials having a simple process, low demand on equipment and no pollution, being easily controllable for the reaction, material morphology and particle size, and suitable for industrial production is provided.

The technical solution to solve the technical problem in the present invention is:

Aluminate fluorescent materials comprising a core, and a shell coating said core, wherein said core is metal nano particle, said shell is fluorescent powder represented by the following chemical formula: (Ce₁₋ₓTbₓ)MgAl₁₁O₁₉, wherein 0<x ≤0.7.

And, preparation methods of aluminate fluorescent materials, comprising:

dissolving corresponding metal compound of metal nano particle, and then mixing with assistant agent and reducing agent successively, to obtain metal nano particle collosol;

adding the metal nano particle collosol into polyvinylpyrrolidone, mixing and stirring to obtain metal nano particle blended collosol;

according to the stoichiometric ratio of the corresponding elements in the chemical formula of (Ce₁₋ₓTbₓ)MgAl₁₁O₁₉, mixing aluminum salt, terbium salt, cerium salt, magnesium salt, adding acid to form soluble mixed salt solution, then adding into said metal nano particle blended collosol under the temperature in the range of 70 to 90°C, obtaining metal mixed solution, wherein 0<x≤0.7;

adding citric acid monohydrate into said metal mixed solution, then adjusting pH to 3 to 5 with weak base, keeping the temperature constant in a range of 70 to 90°C for 3 to 6 hours, getting wet gel, then drying to obtain xerogel precursor;

pre-burning said precursor, then calcinating in reducing atmosphere, cooling and grinding, obtaining said aluminate fluorescent materials.

In said aluminate fluorescent materials and preparation method thereof, the aluminate fluorescent materials is particulate fluorescent material having spherical or spherical-like structure, which comprises a core and shell, where the core is metal nano particle, and the shell is (Ce₁₋ₓTbₓ)MgAl₁₁O₁₉. The aluminate fluorescent materials with high luminous efficiency are not only uniform in the aspect of particle size distribution, but also are stable in the aspect of structure. The aluminate fluorescent materials is prepared by using wet chemical method, that not only lower the temperature in the synthesis reaction, but also improve the microstructure and macroscopic properties of the aluminate fluorescent materials, the obtained aluminate fluorescent materials have uniform particle size distribution, the luminescent performances of the material are improved effectively. Also, the particle size of the aluminate fluorescent materials can be flexibly adjusted by controlling the metal nano particle diameter and the thickness of the fluorescent powder without the introduction of other impurities to obtain products of high quality. Meanwhile, the only requirement of the preparation method of the aluminate fluorescent materials is to control temperature and add reactants in an appropriate proportion, the products can be obtained. Thus, the preparation process is simple, low equipment requirements, no pollution, easy to control, suitable for industrial production.

### BRIEF DESCRIPTION OF THE DRAWINGS

Further description of the present invention will be illustrated, which combined with embodiments in the drawings:

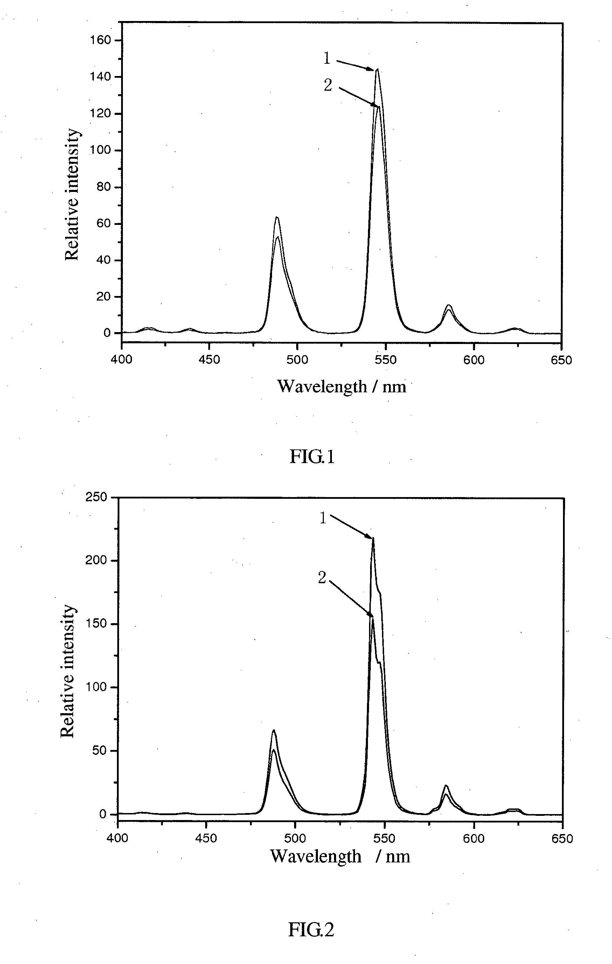

Fig.1 is an emission spectrum of aluminate fluorescent materials excited by cathode ray under 1.5KV acceleration voltage in Example 2 of the present invention with respect to (Ce_{0.67}Tb_{0.33})MgAl₁₁O₁₉. Herein, curve 1 is the emission spectrum of the aluminate fluorescent materials; curve 2 is the emission spectrum of the no Agcoating fluorescent powder (Ce_{0.67}Tb_{0.33})MgAl₁₁O₁₉.

Fig.2 is an emission spectrum of aluminate fluorescent materials excited by excitation light in Example 2 of the present invention with respect to (Ce_{0.67}Tb_{0.33})MgAl₁₁O₁₉ at an excitation wavelength of 285nm. Herein, curve 1 is the emission spectrum of the aluminate fluorescent materials; curve 2 is the emission spectrum of the no Ag-coating fluorescent powder (Ce_{0.67}Tb_{0.33})MgAl₁₁O₁₉.

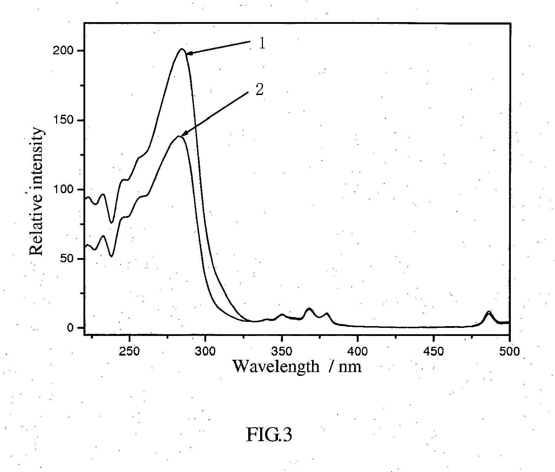

Fig.3 is an excitation spectrum of aluminate fluorescent materials excited by excitation light in Example 2 of the present invention with respect to (Ce_{0.67}Tb_{0.33})MgAl₁₁O₁₉ at a monitoring wavelength of 543nm. Herein, curve 1 is the excitation spectrum of the aluminate fluorescent materials; curve 2 is the excitation spectrum of the no Ag-coating fluorescent powder (Ce_{0.67}Tb_{0.33})MgAl₁₁O₁₉.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides aluminate fluorescent materials comprising a core, and a shell coating said core, wherein said core is metal nano particle, said shell is fluorescent powder represented by the following chemical formula: (Ce₁₋ₓTbₓ)MgAl₁₁O₁₉, wherein 0<x≤0.7.

The chemical formula of said aluminate fluorescent material can be expressed as: (Ce₁₋ₓTbₓ)MgAl₁₁O₁₉@_{y}M, wherein, @ stands for taking M as core, taking (Ce₁₋ₓTbₓ)MgAl₁₁O₁₉ as shell, M is coated in (Ce₁₋ₓTbₓ)MgAl₁₁O₁₉. Where, 0<x≤0.7, preferably, 0.20≤x≤0.40; y is molar ratio of M to (Ce₁₋ₓTbₓ)MgAl₁₁O₁₉, wherein 0 <y≤1×10⁻², preferably, 1×10⁻⁴≤y≤5×10⁻⁵; M is metal nano particle, preferably at least one of Ag, Au, Pt, Pd, Cu nano particle.

Said aluminate fluorescent material is particulate fluorescent material having spherical or spherical-like structure, which comprises a core and shell, where the core is metal nano particle, and the shell is (Ce₁₋ₓTbₓ)MgAl₁₁O₁₉. The fluorescent material has a uniform particle size distribution, a stable structure. Enhancing the fluorescence by plasmon resonance generated on metal surface, the luminous efficiency and luminous intensity of the fluorescent powder is greatly improved. For example, the photo luminescence (PL) intensity of the aluminate fluorescent material in the prevent invention is increased by 40%; the cathode luminescence (CL) intensity of the aluminate fluorescent material in the prevent invention is increased by 17%.

Moreover, the present invention provides a preparation method of said aluminate fluorescent material, comprising:

dissolving corresponding metal compound of metal nano particle, and then mixing with assistant agent and reducing agent successively, to obtain metal nano particle collosol;

adding the metal nano particle collosol into the surface treatment agent polyvinylpyrrolidone, mixing and stirring to obtain metal nano particle blended collosol;

according to the stoichiometric ratio of the corresponding elements in the chemical formula of (Ce₁₋ₓTbₓ)MgAl₁₁O₁₉, mixing aluminum salt, terbium salt, cerium salt, magnesium salt, adding acid to form soluble mixed salt solution, then adding into said metal nano particle blended collosol under the temperature in the range of 70 to 90°C, obtaining metal mixed solution;

adding citric acid monohydrate into said metal mixed solution, then adjusting pH to 3 to 5 with weak base, keeping the temperature constant in a range of 70 to 90°C for 3 to 6 hours, getting wet gel, then drying to obtain xerogel precursor;

pre-burning said precursor, then calcinating in reducing atmosphere, cooling and grinding, obtaining said aluminate fluorescent materials.

A preferred method of making said metal nano particle collosol is: dissolving corresponding metal compound of metal nano particle in alcohols or water, dissolving completely, then adding assistant agent under the condition of magnetic stirring, after that, adding reducing agent, reacts for 10 to 45min to obtain 1×10⁻⁴~4×10⁻³mol/L metal nano particle collosol. The metal nano particle provided in the step is preferably Ag, Au, Pt, Pd or Cu metal; said metal salt is preferably chloroauric acid, silver nitrate, chloroplatinic acid, palladium chloride, metal salt of copper nitrate; assistant agent is preferably at least one of polyvinylpyrrolidone(PVP), sodium citrate, cetyl trimethyl ammonium bromide, sodium dodecyl sulfate, sodium dodecyl sulfonate, said assistant agent acts as a dispersant, which enables the corresponding metal salt solution of nano particle to form an uniform dispersion, preventing the final metal nano particle from agglomerating; reducing agent is preferably at least one of hydrazine hydrate, ascorbic acid, sodium citrate, sodium borohydride, molar ratio of reducing agent to metal ion is in a preferred range of 1.2 to 4.8:1; alcohols is preferably one or two of ethanol, ethanediol.

A preferred method of making said metal nano particle blended collosol is: adding metal nano particle collosol into the surface treatment agent solution polyvinylpyrrolidone (PVP); stirring and reacting to obtain metal nano particle blended collosol containing 1×10⁻⁴-4×10⁻³mol/L metal nano particle. PVP is provided for surface treatment of the metal nano particle; the time of the surface treatment is in a preferred range of 6 to 24h. After the surface treatment of metal nano particle, the obtained metal nano particle blended collosol can be centrifuged, washed, dried to get metal nano particle powder, the concentration of metal nano particle in metal nano particle collosol should be ensured within the range of 1×10⁻⁴~4×10⁻³mol/L by a appropriate addition of surface treatment agent. The objective of adding surface treatment agent is to improve the adsorption and deposition properties of metal nano particle, the objective of stirring is to make the surface of metal nano particle rough, which is beneficial to the adsorption and deposition of metal nano particle.

A preferred method of making said metal mixed solution is: according to the stoichiometric ratio of the corresponding elements in the chemical formula of (Ce₁₋ₓTbₓ)MgAl₁₁O₁₉, mixing aluminum salt, terbium salt, cerium salt, magnesium salt under the condition of magnetic stirring, adding acid to form soluble mixed salt solution, adding into metal nano particle blended collosol or/and metal nano particle powder under the temperature in the range of 70 to 90°C, stirring completely to form metal mixed solution. Herein, aluminum salt is preferably one or two of Al (NO₃)₃, AlCl₃; terbium salt is preferably one or two of Tb (NO₃)₃, TbCl₃; cerium salt is preferably one or two of Ce(NO₃)₃, CeCl₃; magnesium salt is preferably at least one of Mg (OH)₂, MgCO₃ Mg(NO₃)₂; herein, the temperature is preferably controlled by heating in water-bath; acid is added in the process of intermixing, dissolution of salts to accelerate the dissolution of metal salts; said acid is common acid in the art, and the dissolution is preferably enhanced by adding diluted HNO₃, the addition amount is appropriate to the whole dissolution of metal salt.

A preferred method of making said precursor is: dissolving citric acid monohydrate, which is 1 to 3 times as much as the molar mass of total metal ion in metal mixed solution, and dissolving in alcohols to prepare alcoholic solution of citric acid monohydrate with a concentration of 0.87 to 2.6mol/L, dripping into said metal mixed solution, then adjusting the pH to 3 to 5 with weak base, keep the temperature constant in a range of 70 to 90°C for 3 to 6 hours by stirring in water-bath, obtaining wet gel; then drying to obtain xerogel precursor. Herein, citric acid monohydrate can be directly added into metal mixed solution, but considering the reaction rate in this step, citric acid monohydrate is preferably made into alcoholic solution so that citric acid monohydrate can disperse in metal mixed solution rapidly and uniformly; said alcohols is preferably but not limited to ethanol, also, other common alcohols like methanol and ethanediol can be used; the used weak base is preferably but not limited to ammonia water, in a preferred embodiment, when adjusting the pH to 3 to 5, it is necessary to seal the reaction system against the volatilization of ammonia water; said drying preferably comprises: pre-drying in blast drying oven under the temperature in the range of 50 to 80°C, after that, stoving under the temperature in the range of 90 to 150°C; pre-drying can be natural drying, drying in the sun or other methods. In this step, citric acid monohydrate acts as a complexing agent; in order to avoid the introduction of other impurities, weak base is preferably ammonia water.

Said pre-burning is preferably carried out under the temperature in the range of 600 to 900°C for 2 to 6h by placing precursor into high temperature furnace, the pre-burned precursor can be grinded before being calcinated in high temperature furnace or tube furnace, this helps remove organics from precursor; calcinating is preferably carried out in reducing atmosphere under the temperature in the range of 900 to 1400°C for 2 to 5h by placing the pre-burned precursor into box-type high-temperature furnace or tube furnace; said reducing atmosphere is preferably any gas selected from mixed gas of nitrogen and hydrogen, pure hydrogen, carbon monoxide; in a preferred embodiment, when the reducing atmosphere is mixed gas of nitrogen and hydrogen, a preferred volume ratio of nitrogen to hydrogen is 95 : 5 or 90 : 10.

The aluminate fluorescent material is prepared by using wet chemical method, that not only lower the temperature in the synthesis reaction, but also to improve the microstructure and macroscopic properties of the aluminate fluorescent material, the obtained aluminate fluorescent material have uniform particle size distribution, the luminescent performances of the material are improved effectively. Also, the particle size of the aluminate fluorescent material can be flexibly adjusted by controlling the metal nano particle diameter and the thickness of (Ce₁₋ₓTbₓ)MgAl₁₁O₁₉ without the introduction of other impurities to obtain products of high quality. Meanwhile, the only requirement of the preparation method of the aluminate fluorescent material is to control temperature and add reactants in an appropriate proportion, the products can be obtained. Thus, the preparation process is simple, low equipment requirements, no pollution, easy to control, suitable for industrial production.

Special examples are disclosed as follows to demonstrate preparation methods of aluminate fluorescent materials and the performance of it.

### Example 1

The preparation of an aluminate fluorescent material having chemical formula of (Ce_{0.3}Tb_{0.7})MgAl₁₁O₁₉@ Au by using sol-gel coating method:

weighing and dissolving 16.4mg of chloroauric acid in 7.5 mL of ethanol, dissolved completely, stirring and adding 56mg of sodium citrate and 24mg of cetyl trimethyl ammonium bromide, solution A is obtained; weighing and dissolving 7.6mg of sodium borohydride in 10mL of ethanol, obtaining 10mL of 0.02mol/L alcoholic solution of sodium borohydride; under the condition of magnetic stirring, adding 2.5mL of alcoholic solution of sodium borohydride into the solution A, continue to react for 30min, then obtaining Au nano particle collosol containing 4×10⁻³mol/L of Au; weighing and dissolving 0.2g of PVP in 5mL of deionized water; then adding 0.5ml of 4×10⁻³mol/L Au nano particle collosol, stirring for 24h. The Au nano particle blended collosol B is obtained to reserve.

Placing 22mL of 1.0 mol/L Al(NO₃)₃ solution, 7.0ml of 0.2mol/L Tb(NO₃)₃ solution, 1.2ml of 0.5mol/L Ce(NO₃)₃ solution into a conical flask and adding 0.1646g of MgCO₃, then adding 2ml of dilute solution of water and HNO₃ to enhance the dissolution, the volume ratio of water to HNO₃ is 1:1; under the condition of magnetic stirring, heating in water-bath which is maintained at 70°C, then adding said Au nano particle blended collosol B, stirring uniformly to get metal mixed solution C; weighing 10.9273g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 3, sealing, placing into 70°C water-bath, stirring, and keep the temperature constant for 3h, drying in blast drying oven at 60°C overnight, then drying completely at 100°C to obtain precursor; placing the precursor into high temperature furnace and pre-burning at 600°C for 6h, cooling to the room temperature, grinding, then placing into tube furnace, calcinating in reducing atmosphere (the volume ratio of N₂ to H₂ is 90:10) at 1400°C for 2h, naturally cooling. The desired fluorescent material (Ce_{0.3}Tb_{0.7})MgAl₁₁O₁₉ @ Au is obtained.

### Example 2

The preparation of an aluminate fluorescent material having chemical formula of (Ce_{0.67}Tb_{0.33})MgAl₁₁O₁₉@Ag by using sol-gel coating method:

weighing and dissolving 3.40mg of silver nitrate and 35.28mg of sodium citrate in 18.4 mL of deionized water, stirring for 1.5min, solution A is obtained; weighing and dissolving 3.8mg of sodium borohydride in 10mL of ethanol obtaining 0.01mol/L alcoholic solution of sodium borohydride, dripping 1.6ml of the alcoholic solution of sodium borohydride slowly into the solution A; continue to react for 2min, then obtaining 1×10⁻³mol/L Ag nano particle collosol; weighing and dissolving 0.1g of PVP into 7ml of deionized water, the adding 3ml of 1×10⁻³mol/L Ag nano particle collosol; stirring for 12h. The Ag nano particle blended collosol B is obtained to reserve.

Placing 22mL of 1.0 mol/L Al(NO₃)₃ solution, 3.3ml of 0.2mol/L Tb(NO₃)₃ solution, 2.7ml of 0.5mol/L Ce(NO₃)₃ solution into a conical flask and adding 0.1167g of Mg(OH)₂, then adding 1ml of dilute solution of water and HNO₃ to enhance the dissolution, the volume ratio of water to HNO₃ is 1:1; under the condition of magnetic stirring, heating in water-bath which is maintained at 80°C, then adding said Ag nano particle blended collosol B, stirring uniformly to get metal mixed solution C; weighing 10.9273g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 4, sealing, placing into 80°C water-bath, stirring, and keep the temperature constant for 6h, drying in blast drying oven at 60°C overnight, then drying completely at 100°C to obtain precursor; placing the precursor into high temperature furnace and pre-burning at 900°C for 6h, cooling to the room temperature, grinding, then placing into tube furnace, calcinating in reducing atmosphere (the volume ratio of N₂ to H₂ is 95:5) at 1300°C for 2h, naturally cooling. The desired fluorescent powder (Ce_{0.67}Tb_{0.33})MgAl₁₁O₁₉@ Ag is obtained. The no metal nano particle-coating fluorescent powder (Ce_{0.67}Tb_{0.33})MgAl₁₁O₁₉ is prepared using the same method.

Fig.1 is an cathode ray emission spectrum of aluminate fluorescent materials (Ce_{0.67}Tb_{0.33})MgAl₁₁O₁₉@Ag of the present embodiment with respect to (Ce_{0.67}Tb_{0.33})MgAl₁₁O_{19.} It can be seen from the emission peak at 543nm, that the luminous intensity of metal nano particle-coating fluorescent powder is increased by 17%, compared to the no metal nano particle coating fluorescent powder.

Fig.2 and Fig.3 are emission spectrum and excitation spectrum of aluminate fluorescent materials (Ce_{0.67}Tb_{0.33})MgAl₁₁O₁₉@ Ag of the present embodiment with respect to (Ce_{0.67}Tb_{0.33})MgAl₁₁O₁₉, respectively. It can be seen from the emission peak at 543nm in Fig.2 that the luminous intensity of metal nano particle-coating fluorescent powder is increased by 40%, compared to the no metal nano particle coating fluorescent powder.

### Example 3

The preparation of an aluminate fluorescent material having chemical formula of (Ce_{0.67}Tb_{0.33})MgAl₁₁O₁₉@Pt by using sol-gel coating method:

weighing and dissolving 5.2mg of chloroplatinic acid in 17 mL of ethanol, dissolved completely, stirring and adding 8mg of sodium citrate and 1.2mg of sodium dodecyl sulfate, solution A is obtained; weighing and dissolving 0.4mg of sodium borohydride in 10mL of ethanol, obtaining 1×10⁻³mol/L alcoholic solution of sodium borohydride, dripping 0.4mL of the alcoholic solution of sodium borohydride slowly into the solution A, reacting for 5min, then adding 2.6mL of 1×10⁻²mol/L aqueous solution of hydrazine hydrate, continue to react for 40min, then obtaining Pt nano particle collosol containing 5×10⁻⁴mol/L of Pt; weighing and dissolving 0.15g of PVP in 6mL of deionized water; then adding 2ml of 5×10⁻⁴mol/L Pt nano particle collosol, stirring for 18h, centrifuging, washing, filtrating, drying. The Pt nano particle powder B is obtained to reserve.

Placing 22mL of 1.0 mol/L Al(NO₃)₃ solution, 3.3ml of 0.2mol/L Tb(NO₃)₃ solution, 2.7ml of 0.5mol/L Ce(NO₃)₃ solution into a conical flask and adding 0.1167g of Mg(OH)₂, then adding 1ml of dilute solution of water and HNO₃ to enhance the dissolution, the volume ratio of water to HNO₃ is 1:1; under the condition of magnetic stirring, heating in water-bath which is maintained at 90°C, then adding said metal nano particle powder, stirring uniformly to get metal mixed solution B; weighing 5.4637g of citric acid monohydrate (the amount is as much as the molar mass of total metal ion in metal mixed solution B) and dissolving in 30 ml of ethanol to make up solution, dripping the solution into the metal mixed solution B, then adding ammonia water to adjust pH to about 5, sealing, placing into 90°C water-bath, stirring, and keep the temperature constant for 5h, drying in blast drying oven at 80°C overnight, then drying completely at 150°C to obtain precursor; placing the precursor into high temperature furnace and pre-burning at 800°C for 2h, cooling to the room temperature, grinding, then placing into tube furnace, calcinating in reducing atmosphere (the volume ratio of N₂ to H₂ is 90:10) at 900°C for 5h, naturally cooling. The desired fluorescent powder (Ce_{0.67}Tb_{0.33})MgAl₁₁O₁₉@ Pt is obtained.

### Example 4

The preparation of an aluminate fluorescent material having chemical formula of (Ce_{0.60}Tb_{0.40})MgAl₁₁O₁₉@Pd by using sol-gel coating method:

weighing and dissolving 0.43mg of palladium chloride (PdCl₂·2H₂O) in 15 mL of deionized water, dissolved completely, stirring and adding 1.1g of sodium citrate and 0.4g of sodium dodecyl sulfate, solution A is obtained; weighing and dissolving 0.038g of sodium borohydride in 10mL of ethanol, obtaining 0.1mol/L alcoholic solution of sodium borohydride, dripping 5mL of the alcoholic solution of sodium borohydride slowly into the solution A, reacting for 20min, then obtaining Pd nano particle collosol containing 5×10⁻³mol/L, of Pd; weighing and dissolving 0.3g of PVP in 5mL of deionized water; then adding 4ml of 5×10⁻³mol/L Pd nano particle collosol, stirring for 16h. The Pd nano particle blended collosol B is obtained to reserve.

Placing 22mL of 1.0 mol/L Al(NO₃)₃ solution, 4.0ml of 0.2mol/L Tb(NO₃)₃ solution, 2.4ml of 0.5mol/L Ce(NO₃)₃ solution into a conical flask and adding 0.1167g of Mg(OH)₂, then adding 1ml of dilute solution of water and HNO₃ to enhance the dissolution, the volume ratio of water to HNO₃ is 1:1; under the condition of magnetic stirring, heating in water-bath which is maintained at 80°C, then adding the Pd nano particle blended collosol B, stirring uniformly to get metal mixed solution C; weighing 16.3911g of citric acid monohydrate (the amount is 3 times as much as the molar mass of total metal ion in metal mixed solution C) and dissolving in 30 ml of ethanol to make up solution, dripping the solution into the metal mixed solution C, then adding ammonia water to adjust pH to about 5, sealing, placing into 85°C water-bath, stirring, and keep the temperature constant for 5h, drying in blast drying oven at 80°C overnight, then drying completely at 100°C to obtain precursor; placing the precursor into high temperature furnace and pre-burning at 800°C for 2h, cooling to the room temperature, grinding, then placing into tube furnace, calcinating in reducing atmosphere (the volume ratio of N₂ to H₂ is 90:10) at 900°C for 5h, naturally cooling. The desired fluorescent powder (Ce_{0.60}Tb_{0.40})MgAl₁₁O₁₉@Pd is obtained.

### Example 5

The preparation of an aluminate fluorescent material having chemical formula of (Ce_{0.80}Tb_{0.20})MgAl₁₁O₁₉@Cu by using sol-gel coating method:

weighing and dissolving 2.3mg of copper nitrate in 16 mL of ethanol, dissolved completely, stirring and adding 12mg of PVP, solution A is obtained; weighing and dissolving 0.4mg of sodium borohydride in 10mL of ethanol, obtaining 1×10⁻³mol/L alcoholic solution of sodium borohydride, dripping 4mL of the alcoholic solution of sodium borohydride slowly into the solution A, reacting for 2min, then obtaining Cu nano particle collosol containing 4×10⁻⁴mol/L of Cu; weighing and dissolving 0.05g of PVP in 5mL of deionized water; then adding 0.5ml of 4×10⁻⁴mol/L Cu nano particle collosol, stirring for 24h. The Cu nano particle blended collosol B is obtained to reserve.

Placing 22mL of 1.0 mol/L Al(NO₃)₃ solution, 2.0ml of 0.2mol/L Tb(NO₃)₃ solution, 3.2ml of 0.5mol/L Ce(NO₃)₃ solution into a conical flask and adding 0.1167g of Mg(OH)₂; under the condition of magnetic stirring, heating in water-bath which is maintained at 80°C, then adding the Cu nano particle blended collosol B, stirring uniformly to get metal mixed solution C; weighing 10.9273g of citric acid monohydrate (the amount is 2 times as much as the molar mass of total metal ion in metal mixed solution C) and dissolving in 30 ml of ethanol to make up solution, dripping the solution into the metal mixed solution C, then adding 1mol/L aqueous solution of sodium carbonate to adjust pH to about 4, sealing, placing into 80°C water-bath, stirring, and keep the temperature constant for 6h, naturally drying, then drying completely at 100°C to obtain precursor; placing the precursor into high temperature furnace and pre-burning at 900°C for 6h, cooling to the room temperature, grinding, then placing into tube furnace, calcinating in reducing atmosphere (CO) at 1200°C for 2h, naturally cooling. The desired fluorescent powder (Ce_{0.80}Tb_{0.20})MgAl₁₁O₁₉@ Cu is obtained.

### Example 6

The preparation of an aluminate fluorescent material having chemical formula of (Ce_{0.67}Tb_{0.33})MgAl₁₁O₁₉@Ag by using sol-gel coating method:

weighing 0.0429g of AgNO₃, 0.0733g of sodium citrate, 0.05g of PVP, and make up 10ml of 0.025 mol/L aqueous solution of AgNO₃, 10mL of 0.025 mol/L aqueous solution of sodium citrate, 10mL of 5mg/mL aqueous solution of PVP, respectively; adding 2ml of aqueous solution of AgNO₃ and 4ml of PVP into 30ml of deionized water, stirring, solution A is obtained; heating to 100°C, then dripping 4ml of aqueous solution of sodium citrate slowly into the solution A, reacting for 15min, then obtaining Ag nano particle collosol containing 1×10⁻³ mol/L of Ag: weighing and dissolving 0.05g of PVP in 4mL of deionized water; then adding 10ml of 1×10⁻³mol/L Ag nano particle collosol, stirring for 24h. The Ag nano particle blended collosol B is obtained to reserve.

Placing 22mL of 1.0 mol/L Al(NO₃)₃ solution, 3.3ml of 0.2mol/L Tb(NO₃)₃ solution, 2.7ml of 0.5mol/L Ce(NO₃)₃ solution into a conical flask and adding 0.1167g of Mg(OH)₂, then adding 1ml of dilute solution of water and HNO₃ to enhance the dissolution, the volume ratio of water to HNO₃ is 1:1; under the condition of magnetic stirring, heating in water-bath which is maintained at 80°C, then adding the Ag nano particle blended collosol B, stirring uniformly to get metal mixed solution C; weighing 10.9273g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 4, sealing, placing into 80°C water-bath, stirring, and keep the temperature constant for 6h, drying in blast drying oven at 60°C overnight, then drying completely at 100°C to obtain precursor; placing the precursor into high temperature furnace and pre-burning at 900°C for 6h, cooling to the room temperature, grinding, then placing into tube furnace, calcinating in reducing atmosphere (H₂) at 1300°C for 3h, naturally cooling. The desired fluorescent powder (Ce_{0.67}Tb_{0.33})MgAl₁₁O₁₉@Ag is obtained.

### Example 7

The preparation of an aluminate fluorescent material having chemical formula of (Ce_{0.67}Tb_{0.33})MgAl₁₁O₁₉@Pt/Au by using sol-gel coating method:

weighing and dissolving 6.2mg of chloroauric acid (AuCl₃·HCl·4H₂O) and 7.8mg of chloroplatinic acid in 28 mL of deionized water, dissolved completely, under the condition of magnetic stirring, dissolving 20mg of PVP and 22mg of sodium citrate in the mixed solution, solution A is obtained; weighing and dissolving 5.7mg of sodium borohydride in 10mL of deionized water, obtaining 10ml of 1.5×10⁻²mol/L aqueous solution of sodium borohydride; under the condition of magnetic stirring, adding 2ml of 1.5×10⁻²mol/L aqueous solution of sodium borohydride into the solution A at once; reacting for 20min, then obtaining 30ml of Pt/Au nano particle collosol containing 1×10⁻³mol/L of total metal ions; adding 20mg of PVP into 5mL of Pt/Au nano particle collosol, magnetic stirring for 6h. The surface treated Pt/Au nano particle blended collosol B is obtained.

Placing 22mL of 1.0 mol/L AlCl₃ solution, 3.3ml of 0.2mol/L TbCl₃ solution, 2.7ml of 0.5mol/L CeCl₃ solution into a conical flask and adding 0.2968g of Mg(NO₃)₂; under the condition of magnetic stirring, heating in water-bath which is maintained at 80°C, then adding the Pt/Au nano particle blended collosol B, stirring uniformly to get metal mixed solution C; weighing 10.9273g of citric acid monohydrate (the amount is 2 times as much as the molar mass of total metal ion in metal mixed solution C) and dissolving in 30 ml of ethanol to make up solution, dripping the solution into the metal mixed solution C, then adding ammonia water to adjust pH to about 4, sealing, placing into 80°C water-bath, stirring, and keep the temperature constant for 6h, drying in blast drying oven at 60°C overnight, then drying completely at 120°C to obtain precursor; placing the precursor into high temperature furnace and pre-burning at 900°C for 6h, cooling to the room temperature, grinding, then placing into tube furnace, calcinating in reducing atmosphere (H₂) at 1300°C for 3h, naturally cooling. The desired fluorescent powder (Ce_{0.67}Tb_{0.33})MgAl₁₁O₁₉@ Pt/Au is obtained.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. Aluminate fluorescent materials comprising a core, and a shell coating said core, wherein said core is metal nano particle, said shell is fluorescent powder represented by the following chemical formula: (Ce₁₋ₓTbₓ)MgAl₁₁O₁₉, wherein 0<x ≤0.7.

2. The aluminate fluorescent materials as in claim 1, wherein the molar ratio of said core to shell is larger than 0, less than 1× 10⁻²; wherein 0.20≤x≤0.40.

3. The aluminate fluorescent materials as in claim 1, wherein said metal nano particle is at least one of Ag, Au, Pt, Pd, Cu.

4. Preparation methods of aluminate fluorescent materials, comprising:
dissolving corresponding metal compound of metal nano particle, and then mixing with assistant agent and reducing agent successively, to obtain metal nano particle collosol;
adding the metal nano particle collosol into polyvinylpyrrolidone, mixing and stirring to obtain metal nano particle blended collosol;
according to the stoichiometric ratio of the corresponding elements in the chemical formula of (Ce₁₋ₓTbₓ)MgAl₁₁O₁₉, mixing aluminum salt, terbium salt, cerium salt, magnesium salt, adding acid to form soluble mixed salt solution, then adding into said metal nano particle blended collosol under the temperature in the range of 70 to 90°C, obtaining metal mixed solution, wherein 0<x≤0.7;
adding citric acid monohydrate into said metal mixed solution, then adjusting pH to 3 to 5 with weak base, keep the temperature constant in the range of 70 to 90°C for 3 to 6 hours, getting wet gel, then drying to obtain xerogel precursor;
pre-burning said precursor, then calcinating in reducing atmosphere, cooling and grinding, obtaining said aluminate fluorescent materials.

5. The preparation methods of aluminate fluorescent materials as in claim 4, wherein, in the step of making said metal nano particle collosol, the corresponding metal salt of metal nano particle is at least one of chloroauric acid, silver nitrate, chloroplatinic acid, palladium chloride, copper nitrate;
said assistant agent is at least one of polyvinylpyrrolidone, sodium citrate, cetyl trimethyl ammonium bromide, sodium dodecyl sulfate, sodium dodecyl sulfonate;
said reducing agent is at least one of hydrazine hydrate, ascorbic acid, sodium citrate, sodium borohydride.

6. The preparation methods of aluminate fluorescent materials as in claim 4, wherein the molar ratio of said reducing agent to metal ion is 1.2 to 4.8:1.

7. The preparation methods of aluminate fluorescent materials as in claim 5, wherein the method of making said metal mixed solution comprises: mixing aluminum salt, terbium salt, cerium salt, magnesium salt according to the stoichiometric ratio of the corresponding elements in the chemical formula of (Ce₁₋ₓTbₓ)MgAl₁₁O₁₉, centrifuging, washing, drying metal nano particle blended collosol under the temperature in the range of 70 to 90°C to get powder, then adding said powder into metal nano particle blended collosol.

8. The preparation method of aluminate fluorescent materials as in claim 4 or 7, wherein, in the step of making said metal mixed solution, said aluminum salt is one or two of Al (NO₃)₃ and AlCl₃;
said terbium salt is one or two of Tb (NO₃)₃ and TbCl₃;
said cerium salt is one or two of Ce (NO₃)₃ and CeCl₃;
said magnesium salt is one or two of Mg (OH)₂, MgCO₃ and Mg(NO₃)₂.

9. The preparation method of aluminate fluorescent materials as in claim 4, wherein, in the step of making said precursor, citric acid monohydrate is made into alcoholic solution of citric acid monohydrate before being used, the molar ratio of citric acid monohydrate to total metal ion in metal mixed solution is 1 to 3:1;
said weak base is ammonia water;
said drying comprises: pre-drying under the temperature in the range of 50 to 80°C, then stoving under the temperature in the range of 90 to 150°C.

10. The preparation method of aluminate fluorescent materials as in claim 4, wherein,
said pre-burning is carried out under the temperature in the range of 600 to 900°C for 2 to 6 hours;
said calcination is carried out under the temperature in the range of 900 to 1400°C for 2 to 5 hours;
said reducing atmosphere is any gas selected from mixed gas of nitrogen and hydrogen, pure hydrogen, carbon monoxide.

## Patentansprüche

1. Fluoreszierende Aluminatmaterialien, die einen Kern und eine Hülle, die den Kern umhüllt, umfassen, worin der Kern ein Metallnanateilchen ist und die Hülle aus durch die folgende chemische Formel dargestelltem fluoreszierendem Pulver ist: (Ce₁₋ₓTbₓ)MgAl₁₁O₁₉, worin 0 < x ≤ 0,7 ist.

2. Fluoreszierende Aluminatmaterialien nach Anspruch 1, worin das Molverhältnis zwischen dem Kern und der Hülle größer als 0 und kleiner als 1 x 10⁻² ist; worin 0,20 ≤ x ≤ 0,40 ist.

3. Fluoreszierende Aluminatmaterialien nach Anspruch 1, worin das Metallnanoteilchen zumindest eines von Ag, Au, Pt, Pd, Cu ist.

4. Verfahren zur Herstellung von fluoreszierenden Aluminatmaterialien, das Folgendes umfasst:
das Lösen einer entsprechenden Metallverbindung eines Metallnanoteilchens und dessen anschließendes Mischen nacheinander mit Hilfsmittel und Reduktionsmittel, um ein Metallnanoteilchencollosol zu erhalten;
das Zusetzen des Metallnanoteilchencollosols zu Polyvinylpyrrolidon, dessen Mischen und Rühren, um vermengtes Metallnanoteilchencollosol zu erhalten;
das Mischen von Aluminiumsalz, Terbiumsalz, Cersalz, Magnesiumsalz gemäß dem stöchiometrischen Verhältnis der entsprechenden Elemente in der chemischen Formel (Ce₁₋ₓTbₓ)MgAl₁₁O₁₉, das Zusetzen von Säure, um lösliche, gemischte Salzlösung zu erhalten, dann das Zusetzen in vermengtes Metallnanoteilchencollosol bei einer Temperatur im Bereich von 70 bis 90 °C, das Erhalten einer gemischten Metalllösung, worin 0 < x ≤ 0,7 ist;
das Zusetzen von Citronensäuremonohydrat in die gemischte Metalllösung, das anschließende Einstellen des pH auf 3 bis 5 mit schwacher Base, das 3 bis 6 h lange Konstanthalten der Temperatur im Bereich von 70 bis 90 °C, das Erhalten von nassem Gel und das anschließende Trocknen, um einen Xerogelvorläufer zu erhalten;
das Vorbrennen des Vorläufers, dessen anschließendes Kalzinieren in reduzierender Atmosphäre, Kühlen und Zerkleinern und das Erhalten der fluoreszierenden Aluminatmaterialien.

5. Verfahren zur Herstellung von fluoreszierenden Aluminatmaterialien nach Anspruch 4, worin in dem Schritt der Herstellung des Metallnanoteilchencollosols das entsprechende Metallsalz des Metallnanoteilchens zumindest eines von Chlorgoldsäure, Silbernitrat, Chlorplatinsäure, Palladiumchlorid und Kupfernitrat ist;
das Hilfsmittel zumindest eines von Polyvinylpyrrolidon, Natriumcitrat, Cetyltrimethylammoniumbromid, Natriumdodecylsulfat, Natriumdodecylsulfonat ist;
das Reduktionsmittel zumindest eines von Hydrazinhydrat, Ascorbinsäure, Natriumcitrat, Natriumborhydrid ist.

6. Verfahren zur Herstellung von fluoreszierenden Aluminatmaterialien nach Anspruch 4, worin das Molverhältnis zwischen dem Reduktionsmittel und dem Metallion 1,2 bis 4,8 zu 1 ist.

7. Verfahren zur Herstellung von fluoreszierenden Aluminatmaterialien nach Anspruch 5, worin das Verfahren zur Herstellung der gemischten Metalllösung Folgendes umfasst: das Mischen von Aluminiumsalz, Terbiumsalz, Cersalz, Magnesiumsalz gemäß dem stöchiometrischen Verhältnis der entsprechenden Elemente in der chemischen Formel (Ce₁₋ₓTbₓ)MgAl₁₁O₁₉, das Zentrifugieren, Waschen und Trocknen des vermengten Metallnanoteilchencollosols bei einer Temperatur im Bereich von 70 bis 90 °C zum Erhalten von Pulver und das anschließende Zusetzen des Pulvers in das vermengte Metallnanoteilchencollosol umfasst.

8. Verfahren zur Herstellung von fluoreszierenden Aluminatmaterialien nach Anspruch 4 oder 7, worin in dem Schritt der Herstellung der gemischten Metalllösung das Aluminiumsalz eines oder beide von Al(NO₃)₃ und AlCl₃ ist;
das Terbiumsalz eines oder beide von Tb(NO₃)₃ und TbCl₃ ist;
das Cersalz eines oder beide von Ce(NO₃)₃ und CeCl₃ ist;
das Magnesiumsalz eines oder zwei von Mg(OH)₂, MgCO₃ und Mg(NO₃)₂ ist.

9. Verfahren zur Herstellung von fluoreszierenden Aluminatmaterialien nach Anspruch 4, worin in dem Schritt der Herstellung des Vorläufers Citronensäuremonohydrat vor dessen Verwendung zu einer alkoholischen Lösung von Citronensäuremonohydrat gemacht wird, das Molverhältnis zwischen dem Citronensäuremonohydrat und den gesamten Metallionen in der gemischten Metalllösung 1 bis 3 zu 1 ist;
die schwache Base Ammoniakwasser ist;
das Trocknen Folgendes umfasst: das Vortrocknen bei einer Temperatur im Bereich von 50 bis 80 °C und das anschließende Einbrennen bei einer Temperatur im Bereich von 90 bis 150 °C.

10. Verfahren zur Herstellung von fluoreszierenden Aluminatmaterialien nach Anspruch 4, worin
das Vorbrennen 2 bis 6 h lang bei einer Temperatur im Bereich von 600 bis 900 °C durchgeführt wird;
das Kalzinieren 2 bis 5 h lang bei einer Temperatur im Bereich von 900 bis 1400 °C durchgeführt wird;
die reduzierende Atmosphäre jedes beliebige aus einem Gasgemisch aus Stickstoff und Wasserstoff, reinem Wasserstoff und Kohlenmonoxid ausgewählte Gas ist.

## Revendications

1. Matériaux fluorescents à base d'aluminate comprenant un noyau et une coque revêtant ledit noyau, où ledit noyau est une nano particule métallique, ladite coque est une poudre fluorescente représentée par la formule chimique suivante : (Ce₁₋ₓTbₓ)MgAlₙO₁₉, où 0 < x ≤ 0,7.

2. Matériaux fluorescents à base d'aluminate selon la revendication 1, où le rapport molaire dudit noyau à la coque est supérieure à 0, inférieur à 1x10⁻² ; où 0,20 ≤ x ≤ 0,40.

3. Matériaux fluorescents à base d'aluminate selon la revendication 1, où ladite nano particule métallique est au moins une de Ag, Au, Pt, Pd, Cu.

4. Méthodes de préparation de matériaux fluorescents à base d'aluminate, comprenant :
dissoudre un composé métallique correspondant de la nano particule métallique, et mélanger ensuite avec un agent d'assistance et un agent de réduction successivement, pour obtenir un collosol de nano particule métallique ;
ajouter le collosol de nano particule métallique dans de la polyvinyle-pyrrolidone, mélanger et agiter pour obtenir un collosol mélangé de nano particule métallique ;
en accord avec le rapport stoechiométrique des éléments correspondants dans la formule chimique de (Ce₁₋ₓTbₓ)MgAl₁₁O₁₉, mélanger le sel d'aluminium, le sel de terbium, le sel de cérium, le sel de magnésium, ajouter de l'acide pour former une solution saline mélangée soluble, ajouter ensuite dans ledit collosol mélangé de nano particule métallique sous la température dans la plage de 70 à 90 °C, obtenir la solution métallique mélangée, où 0 < x ≤ 0,7 ;
ajouter du monohydrate d'acide citrique dans ladite solution métallique mélangée, ajuster ensuite le pH à 3 à 5 avec une base faible, maintenir la température constante dans la plage de 70 à 90 °C pendant 3 à 6 heures, obtenir un gel humide, sécher ensuite pour obtenir un précurseur de xérogel ;
pré-bruler ledit précurseur, ensuite calciner dans une atmosphère de réduction, refroidir et meuler, obtenir lesdits matériaux fluorescents à base d'aluminate.

5. Méthodes de préparation de matériaux fluorescents à base d'aluminate selon la revendication 4, dans lesquelles, dans l'étape de préparation dudit collosol de nano particule métallique, le sel métallique correspondant de la nano particule métallique est au moins un parmi l'acide chloro-aurique, le nitrate d'argent, l'acide chloro-platinique, le chlorure de palladium, le nitrate de cuivre ;
ledit agent d'assistance est au moins un parmi la polyvinyle-pyrrolidone, le sodium citrate, le cétyl triméthyle ammonium bromure, le sodium dodécyl sulfate, le sodium dodécyl sulfonate ;
ledit agent de réduction est au moins un parmi l'hydrazine hydrate, l'acide ascorbique, le sodium citrate, le sodium borohydride.

6. Méthodes de préparation de matériaux fluorescents à base d'aluminate selon la revendication 4, où le rapport molaire dudit agent de réduction à l'ion métallique est de 1,2 à 4,8 :1.

7. Méthodes de préparation de matériaux fluorescents à base d'aluminate selon la revendication 5, où la méthode de préparation de ladite solution mélangée métallique comprend : mélanger le sel d'aluminium, le sel de terbium, le sel cérium, le sel de magnésium selon le rapport stoechiométrique des éléments correspondants dans la formule chimique de (Ce₁₋ₓTbₓ)MgAl₁₁0₁₉, centrifuger, laver, sécher le collosol mélangé de nano particules métalliques sous la température dans la plage de 70 à 90 °C pour obtenir une poudre, ensuite ajouter cette poudre au collosol mélangé de nano particules métalliques.

8. Méthodes de préparation de matériaux fluorescents à base d'aluminate selon la revendication 4 ou 7, dans laquelle, à l'étape de préparation de ladite solution métallique mélangée, ledit sel d'aluminium est un ou deux de Al(NO₃)₃ et AlCl₃ ;
ledit sel de terbium est un ou deux de Tb(NO₃)₃ et TbCl₃ ;
ledit sel de cérium est un ou deux de Ce(NO₃)₃ et CeCl₃ ;
ledit sel de magnésium est un ou deux de Mg(OH)₂, MgCO₃ et Mg(NO₃)₂.

9. Méthodes de préparation de matériaux fluorescents à base d'aluminate selon la revendication 4, dans laquelle, à l'étape de préparation dudit précurseur, le monohydrate d'acide citrique est amené en une solution alcoolique du monohydrate d'acide citrique avant d'être utilisé, le rapport molaire du monohydrate d'acide citrique à l'ion métallique total dans la solution métallique mélangée est de 1 à 3 :1 ;
ladite base faible est de l'eau ammoniaquée ;
ledit séchage comprend : le pré-séchage sous la température dans la plage de 50 à 80 °C, ensuite la cuisson au four sous la température dans la plage de 90 à 150 °C.

10. Méthodes de préparation de matériaux fluorescents à base d'aluminate selon la revendication 4, où
ladite précombustion est exécutée sous la température dans la plage de 600 à 900 °C pendant 2 à 6 heures ;
ladite calcination est exécutée sous la température dans la plage de 900 à 1400 °C pendant 2 à 5 heures ;
ladite atmosphère de réduction est n'importe quel gaz sélectionné parmi un gaz mélangé d'azote et d'hydrogène, d'hydrogène pur, de monoxyde de carbone.
